# EUROPÄISCHE PATENTANMELDUNG

(11) **EP 0 554 830 A1**
(43) Veröffentlichungstag der Anmeldung: **11.08.1993**
(21) Anmeldenummer: 93101570.5
(22) Anmeldetag: 02.02.1993
(51) Int. Cl.: G06K 7/08, G06K 19/06

(54) **Plastikkarte mit elektronischer Magnetstreifensimulation**

(30) Priorität: 03.02.1992 DE 4202998
(71) Anmelder: Angewandte Digital Elektronik GmbH, 21521 Dassendorf (DE)
(72) Erfinder: Kreft, Hans-Diedrich, W-2055 Dassendorf (DE)

(57) **Zusammenfassung**

Es wird beschrieben, wie ein Magnetstreifen einer herkömmlichen Plastikkarte elektronisch simuliert werden kann, so daß das weiterverarbeitende System in gewohnter Weise Daten empfängt und weiterverarbeiten kann.

## Beschreibung

### Problemstellung:

Im Einsatz befindliche Plastikkarten, welche elektronisch ablesbar sind, arbeiten vorzugsweise nach zwei Verfahren. Am weitesten verbreitet sind Karten mit Magnetstreifen, welche keinen Chip zur Speicherung und Bearbeitung von Information enthalten. Zunehmend werden Karten eingesetzt, welche einen Chip enthalten, in dem Informationen sicher gespeichert und elektronisch verändert werden können. Diese Karten werden Chipkarten oder smart cards genannt. Es ist Aufgabe der dargestellten Erfindung, eine Chipkarte zu beschreiben, welche durch eine geeignete elektronische Ausgestaltung das Vorhandensein eines Magnetstreifen simuliert. Dem Lesekopf wird zur Aufnahme der Information die physikalische Form der Informationsablage eines Magnetstreifen simuliert.

Die Versorgung der auf der Karte erforderlichen Chips mit Strom und Spannung geschieht über Kontakte oder kontaktfrei nach einem Verfahren, wie es in der Patentschrift DE 34 47 560 C2 dargelegt ist. Unter Verwendung von Patentschrift DE 34 47 560 C2 arbeiten Chipkartensysteme kontaktfrei, indem Energie- und Datenübertragung induktiv erfolgen.

Die Lage der Magnetstreifen sind kartenseitig international genormt. Die bestehenden Normvorgaben für die Karte werden durch geschickte Anordnung der elektronischen Bauelemente auf der Karte so genutzt, daß der Lesekopf in gleicher Weise seine Signale erhält, wie bei der Bewegung des kartenseitigen Magnetstreifens relativ zum Spulenkopf. Gleichzeitig wird auch die Nutzung einer kontaktfreien Karte in ihren vier möglichen Einstecklagen gewährleistet.

### Beschreibung der patentgemäßen Lösung.

### Erläuterung zu Grafik 1:

Eine Ausführungsform der patentgemäßen Lösung ist in Grafik 1 dargestellt. Der Kartenkörper 4 trägt den Magnetstreifen 2. Die Position zur Unterbringung der Spule 1 ist geometrisch innerhalb des Magnetstreifen 2. Der Chip 3 dient zur Versorgung der Spule 1.

### Zu Anspruch 1:

Erfindungsgemäß werden die magnetischen Eigenschaften eines Magnetstreifen auf einer Plastikkarte durch eine Spule 1 simuliert. Zur Erfüllung dieses Zweckes ist diese Spule 1 in einer Position auf der Karte 4 unterzubringen, an der sich in der Kartenruheposition der Schreib/Lesekopf des Einschubsystems der Karte befindet. Die Informationsübertragung von Magnetstreifen 2 zum Lesekopf geschieht durch magnetische Induktion im Lesekopf durch Bewegung der magnetischen Felder bei Bewegung des Magnetstreifen. Der induktive Spannungspuls in der Lesespule ist von einer geeignet ausgeformten Spule 1 zu simulieren, so daß keine Unterscheidung der Signale in der Lesespule nach ihrer Herkunft oder Erzeugung möglich ist.

### Zu Anspruch 2:

Die Versorgung der Spule 1 mit Strom und Spannung kann von dem gleichen elektronischen Bauteil 3 erfolgen, welches auch die elektronischen Chips versorgt, welche sich bei Chipkarten auf der Karte befinden. Dasselbe Bauteil 3 kann auch die Protokollsimulation der Magnestreifensignale übernehmen, welche international genormt sind. Die zeitliche Verteilung der Signale an der Spule 1 kann elektronisch so gestaltet werden, daß das geschwindigkeitskonstante Vorbeiführen eines Magnetstreifen 2 an einem Lesekopf simuliert wird. Es kann auch zur Erfüllung des Zweckes von Anspruch 2 eine gesonderte Elektronik 3 auf der Karte 4 aufgebaut werden, welche ausschließlich der Simulation der Magnetkopfsignale dient.

### Zu Anspruch 3:

Um eine Nutzung der Karte 4 für den Anwender unabhängig von einer Vorzugslage zu machen, werden vier Spulen in die vier Randlagen der Karte gebracht.

### Zu Anspruch 4:

Sind gemäß Anspruch 3 vier Spulen 1 vorhanden, welche gleichzeitig aktiv Signale aussenden, wird der Stromverbrauch unnötig erhöht. Zusätzlich treten Signalabstrahlungen auf, welche für andere Systeme störend sind und gesetzliche Richtwerte überschreiten. Aus diesem Grunde, kann die Elektronik 3 indizieren, welche Spule dem Lesekopf gegenüberliegt. Nur diese Spule wird aktiviert. Die Indikation der Spule kann über die elektronische Auswertung der Beeinflussung von benachbarten Spulen erfolgen.

### Zu Anspruch 5:

Vierlageneinsteckmöglichkeit der Karte 4 wird auch erreicht, wenn die Funktion des magnetischen Lesekopfes leserseitig überbrückt wird. Dies kann durch direkte galvanische Verbindung zwischen leserseitiger Kartenelektronik und Verbindungskabel zwischen Magnetlesekopf und Auswerteelektronik geschehen. Eine sehr starke kontaktlose Einkopplung in einen linearen Leiter ist auch möglich, indem um den Leiter die Koppelspulen gelegt werden.

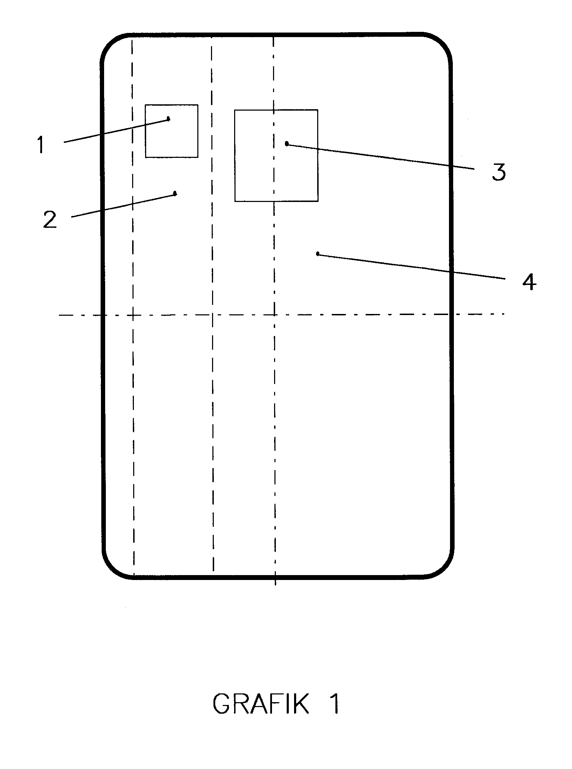

## Patentansprüche

1. Die Erfindung beschreibt eine besondere Ausgestaltung marktüblicher Plastikkarten 4, welche **dadurch gekennzeichnet ist**, daß eine Spule 1 zur Erzeugung von magnetischen Feldern in einer Plastikkarte 4 an der Stelle plaziert ist, an der sich in der Kartenruheposition in einem Magnetkartenleser der Lesekopf zum Lesen und/oder Schreiben der magnetischen Polarisierung des Magnetstreifens befindet und daß ferner die Spule 1 elektronisch so ausgestaltet ist, daß ein von ihr erzeugtes magnetisches Feld dem magnetischen, lokalen Feld eines Magnetstreifen 2 in seinen physikalischen Eigenschaften entspricht.

2. Gemäß Anspruch 1 **dadurch gekennzeichnet**, daß die Versorgung und elektronische Ansteuerung der Spule 1 von einer Elektronik 3 gewährleistet wird, welche üblicherweise auf Chipkarten zur Versorgung und zum Datenaustausch vorhanden ist und die Ansteuerung der Spule 1 in einer Weise geschieht, welche der leseseitigen Empfängerspule das Vorhandensein eines Magnetstreifens 2 per Elektronik 3 physikalisch simuliert, wobei die auf einem Magnetstreifen 2 räumlich nebeneinanderliegenden Informationen zeitlich nacheinander erzeugt werden, so daß die Erzeugung von Signalen durch Vorbeibewegung eines Magnetstreifen 2 am Lesekopf durch zeitliche Folge am festen Punkt der Spule 1 simulativ erfolgt.

3. Gemäß Anspruch 1 **dadurch gekennzeichnet**, daß die Spule 1 vierfach auf der Karte 4 vorhanden ist und daß die einzelnen Positionen bei Drehung der Karte um die beiden Hauptsymmetrieachsen identisch sind, so daß ein Vorbeiführen der Karte an einem Lesekopf in vier verschiedenen Kartenlagen möglich ist, da eine Spule jeweils dem Lesekopf gegenüber zu liegen kommt.

4. Gemäß Anspruch 3 **dadurch gekennzeichnet**, daß die Elektronik aufgrund der elektromagnetischen Rückwirkung von Lesekopfspule und eine der vier Spulen 1, nur die jeweils der Lesekopfspule gegenüberliegende Spule mit Signalen versorgt.

5. Gemäß Anspruch 2 **dadurch gekennzeichnet**,daß die Elektronik 3 ihre Informationen kontaktbehaftet oder kontaktfrei an das leserseitige System überträgt und leserseitig an die Verbindungsdrähte vom Lesekopf des Magnetkartenlesers zum Auswerteteil des Magnetkartenlesers ein galvanischer Anschluß oder eine induktive Kopplung besteht, so daß der Lesekopf nicht zur Übertragung der Daten benötigt wird.
